Europäisches Patentamt

European Patent Office

Office européen des brevets

(11) Publication number: **0 426 311 B1**

## EUROPEAN PATENT SPECIFICATION

(45) Date of publication of patent specification: **04.01.95**

(51) Int. Cl.⁶: **A23B 9/02**, A23L 3/22, A23B 7/005, A23L 1/227

(21) Application number: **90311020.3**

(22) Date of filing: **09.10.90**

(54) **Method of processing spices and other aromatic edible vegetable matter.**

(30) Priority: **10.10.89 GB 8922753**

(43) Date of publication of application:
**08.05.91 Bulletin 91/19**

(45) Publication of the grant of the patent:
**04.01.95 Bulletin 95/01**

(84) Designated Contracting States:
**AT BE CH DE DK ES FR GB GR IT LI LU NL SE**

(56) References cited:
**EP-A- 0 061 305**      **EP-A- 0 131 701**
**EP-A- 0 169 106**      **EP-A- 0 198 938**
**WO-A-80/01868**      **DE-A- 3 238 791**
**FR-A- 2 598 062**      **GB-A- 2 013 469**
**US-A- 3 114 639**      **US-A- 4 210 678**

**DERWENT FILE SUPPLIER WPI/L, 1982, AN=82-02859J, Derwent Publications Ltd,London, GB; & JP-A-57 170 142 (AJINOMOTO K.K.)**

**DERWENT FILE SUPPLIER, PATENT AB-STRACTS OF JAPAN, vol. 11, no. 185 (C-428)[2632], 13th June 1987; & JP-A-62 11 057 (KYODO NYUGYO K.K.) 20-01-1987**

(73) Proprietor: **LUCAS INGREDIENTS LIMITED Moravian Road, Kingswood Bristol BS15 2NG (GB)**

(72) Inventor: **Butchers, David James 26 Seymour Street Cambridge, CB1 3DO (GB)**
Inventor: **Frazier, Peter John "Walnut House", 17 Scotts Crescent Hilton Hungtingdon, Cambridgeshire PE189PG (GB)**
Inventor: **Kierstan, marek Piotr Jacek 2 Parsonage Corner, West End Whittlesford, Cambridge CB2 4LX (GB)**
Inventor: **Daniels, Norman William Roy, Prof. 271 Oueen Edith's Way Cambridge CB1 4NH (GB)**
Inventor: **Scott, Richard Wayside, North Road Bathwick Hill, Bath BA2 6HB (GB)**

(74) Representative: **Hughes, Brian Patrick et al**
**Graham Watt & Co.**
**Riverhead**
**Sevenoaks, Kent TN13 2BN (GB)**

## Description

The present invention relates to a method of preparing an aromatic condiment composition containing aromatic edible vegetable matter, such as spices and herbs, and to the condiment compositions thus prepared.

A considerable problem facing the manufacturers and suppliers of spices and herbs is to ensure that the product provided to the user is substantially free from harmful micro-organisms, especially resistant mesophilic and thermophilic spore forms which can survive mild processing conditions such as pasteurisation. This is particularly important when the user is a manufacturer of pre-cooked and chilled packaged convenience foods. Spices, such as peppercorns, typically are grown in conditions of high heat and humidity; conditions which are ideal for the growth of a wide range of micro-organisms. Peppercorns, a very widely utilised spice, are particularly prone to contamination with harmful micro-organisms, not only as a consequence of the conditions under which they are grown, but also because of the often unhygenic manner in which they are treated immediately following harvesting. The problem is compounded by the fact that peppercorns have a rough outer surface which readily entraps micro-organisms.

The extent of the problem is illustrated by the article by H. Konuma et al in the Journal of Food Protection, Vol. 51, No. 4, pp.324-326, 1988, wherein it was found, following the analysis of a large number of food products, raw meat and meat product additives, that the main source of Bacillus cereus contamination in meat products is not the meat itself but meat product additives such as spices.

Spices such as peppercorns are used widely in the preparation of pre-cooked foods and modern trends in the preparation and use of such foods have, in some ways, increased rather than decreased the likelihood of microbial contamination and the attendent possibility of food poisoning arising therefrom. Thus, for example, in recent years there has been a move towards eliminating preservatives, such as nitrites, from food. Moreover, the increasing use of microwave ovens has also given rise to substantial problems. Such ovens, if used incorrectly, heat foods unevenly thereby leading to the formation of cold pockets in otherwise hot food. In such cold pockets, the spice particles may not reach sufficiently high temperatures for sterilisation to take place.

Sterilisation of aromatic edible vegetable matter such as spices and herbs has hitherto been carried out by heating or by exposure to chemical sterilising agents. In order to obtain a sterile product by heating, relatively high temperatures have to be used. The reason for this is that whilst most harmful bacteria and other harmful viable micro-organisms are destroyed at temperatures between 70° and 100° C (conventional pasteurisation is conducted at 70° C - 80° C), thermophilic and mesophilic spores from spore-bearing micro-organisms are generally destroyed only at temperatures in excess of 100° C. Thus it is usually necessary, in order to achieve an acceptable level of sterility (ie. commercial sterility), to heat the spice or herb to a temperature of 120° C or more for prolonged periods.

The heating of spices and herbs to such temperatures for long periods gives rise to a further problem; namely that the substances, eg. essential oils, which provide the aromatic character of the spice or herb substance are modified by chemical changes or driven off by evaporation thereby significantly reducing the flavour and smell of the substance.

Chemical methods of killing harmful micro-organisms in spices and herbs have also been used. Thus, for example, ethylene oxide has been used for this purpose for many years. However, it is by no means clear that the use of ethylene oxide is without hazards and it has been reported that the use of this substance leads to the formation in the food of toxic chlorohydrins (see US 4,210,678)

It has been proposed (see European Patent No. 0012813 - L. Givaudan et Cie S.A.) to sterilise spices by subjecting them to shearing stresses of at least 2000 N, for example in an extruder, preferably at a temperature between room temperature and 150° C. It is stated in EP 0012813 that the spices are preferably undiluted, ie. are not associated with a carrier, and the specific process conditions exemplified do not include the use of carrier substances.

Extrusion sterilisation of spices and herbs has also been disclosed in US4,210,678 (Bayusik et al), but the Bayusik method is a somewhat time-consuming method involving moistening of the herb or spice and allowing the moistened mass to stand until the moisture content equilibrates above 8-14% by weight, heating the moistened herb or spice to a temperature above 93,3°C (200°F) and finally extruding it through a die. The Bayusik method makes no mention of extenders or carrier substances.

Extrusion of spices is also disclosed in JP 57-170149.

The problem of the loss of volatile essential oils is only partially alleviated by the extrusion sterilisation methods described above and it has been found that substantial further losses of essential oils occur during storage after extrusion, particularly if the extruded spice or herb is ground to a powder, the usual method of presentation. Moreover, it has been reported that extrusion methods of the type discussed above can lead to adverse colour changes with highly coloured spices such as paprika unless special precautions (eg extrusion under a blanket of nitrogen gas) are taken - see Thermal Processing and Quality of Foods, edited by P Zeuthen et al; Elsevier Applied Science Publishers, London and New York 1984, page 186.

It has now been found, that by mixing aromatic edible vegetable food matter, such as a spice or a herb, with an edible extender, and extruding the mixture at an appropriately high temperature, a product results which is substantially equivalent in taste and aroma to the original undiluted aromatic vegetable matter and in some cases has an improved taste and aroma. Moreover, it has been found that spices and herbs extruded with an extender exhibit much better retention of volatile essential oils during storage following extrusion than do spices and herbs extruded without an extender; the improved retention of essential oil being particularly noticeable when the extruded material is subsequently ground. Furthermore, it has been found that by employing the method of the present invention, as defined below, with highly coloured spices and herbs such as paprika, turmeric and parsley, the colour of the resulting extruded product is substantially identical to that of the raw material.

The invention is defined by the claims.

In a first aspect therefore, the present invention provides a method of preparing an aromatic condiment composition, which method comprises passing a mixture containing aromatic edible vegetable matter and at least 2% by weight, relative to the amount of aromatic edible vegetable matter, of an edible extender substance through an extruder wherein the extrusion process conditions comprise:

(a) a residence time of up to 3 minutes,

(b) a temperature in the range from 90 degrees centigrade to 180 degrees centigrade,

(c) a degree of shear sufficiently high to achieve commercial sterility.

Other advantages of the present method include the fact that whole spices, or coarsely chopped or milled spices can be introduced directly into the extruder - ie. there is no need for the spices to be finely ground before extrusion. Also, the method of the present invention enables commercial sterilisation to be achieved without the need to hold the vegetable material at an elevated temperature for prolonged periods. Thus, for example, commercial sterilisation can be achieved in an extruder residence time of as little as 30 seconds at an elevated temperature, and within 3 minutes. Typically however, commercial sterilisation can be effected within 45 seconds to 2 minutes at the elevated temperature.

It is preferred that the total viable count (TVC) of microorganisms (ie. not including spores) and the mesophilic spore count (MSC) and thermophilic spore count (TSC) each are reduced to a level of no more than $10^4$/g, and preferably less than $10^3$/g. The method of the present invention can reduce each count by, for example, up to four log units or more, eg. from $10^7$/g to $10^3$/g or less.

The extender typically is an absorbent, generally mild or bland tasting, or even tasteless substance which is capable of absorbing water and oils from the vegetable matter.

The oil absorbency of the extender typically is such that it can absorb at least half its own weight of a liquid oil, e.g. corn oil. Suitably it can absorb its own weight of liquid oil and most preferably it can absorb over one and a half times its own weight (for example twice its own weight or more) of liquid oil. The oil absorbency of the extender may be determined according to routine methods. One such method involves weighing a known amount of extender substance into a graduated centrifuge tube and then adding a known amount of corn oil. The corn oil and extender are mixed and are then held at ambient temperature for 30 minutes. The free oil is then separated by centrifugation at 3200rpm for 25 minutes and measured volumetrically. Oil absorbency is expressed as the quantity of oil bound by the sample, on a 14% moisture basis, and is subject to an error of around $^+10\%$

Without wishing to be bound by any theory, it is believed that during extrusion, degradation of the cellular structure of the vegetable matter releases the flavour- and aroma-producing substances which are entrapped and retained by the extender.

In general it is preferred that the amount of the extender corresponds to less than 75% by weight, for example less than 50% by weight relative to the amount of edible vegetable matter. Most preferably the amount of the extender is in the range from about 10% to about 30%, for example approximately 25%.

However, where the vegetable matter contains a high fixed oil (i.e. non-volatile oil) content (e.g. greater than 10%) in addition to volatile oils, it is preferred to add an amount of extender which is sufficient to ensure that the total fixed oil content in the extruded condiment composition is no more than 10%. For such high-oil content substances, the amount of extender used may be, for example, up to 200% by weight relative to the vegetable substance, for example approximately 150%. Examples of aromatic edible vegetable substances having high fixed oil contents include nutmeg, mace, coriander and mustard.

The extender substances may be carbohydrate or protein-based. Examples of extenders are substantially carbohydrate-based substances of plant origin; for example starch-based materials such as rusk, flour, tapioca, maize starch and maize grits; sugars and oligosaccharides such as lactose and maltodextrins; food grade celluloses and de-aromatised spices, ie. the residue remaining after the extraction of the essential oils from spices with solvents such as dichloromethane.

Although they may be of plant origin, the carbohydrate-based substances may have been subjected to various processing steps in order to improve their qualities as extenders. For example, the term "rusk" as used herein refers to materials prepared by grinding a dried lightly leavened cereal biscuit, for example as described in Chapter 7.8, pp 385-396 of the publication Cereals in a European Context, First European Conference on Food Science and Technology, edited by I.D. Morton, Published by Ellis Horwood, 1987; or in the publication Modern Cereal Chemistry, Sixth Edition, published by the Food Trade Press Ltd, London.

One particular form of rusk is prepared from flour, water, a bicarbonate leavening agent, eg. ammonium bicarbonate, and optionally sodium chloride. Such a form of dried yeastless rusk is available from Lucas Ingredients Ltd., Kingswood, Bristol, UK. Such a form of rusk has an oil absorbency of approximately one and three quarter times its own weight, as measured by the test method described above.

In general the particle size of the rusk extender will be such that substantially all of the particles have a size in the range 50 to 250 $\mu$m.

The protein based extenders suitably are those having a high protein-dispersibility index (PDI). The protein-dispersibility index is given by the relationship:

$$PDI = \frac{\text{\% Water dispersible protein} \times 100}{\text{\% Total Protein}}$$

A method of measuring PDI is given in "Soybeans" Chemistry and Technology, Volume 1, Ed. A K Smith & S J Circle, The AVI Publishing Company, Inc., Westport, Connecticut, 1972, pages 451 to 454.

The PDI is a measure of the dispersibility of the protein and higher PDI values indicate higher solubility. Examples of high PDI protein-based extenders are defatted soya grits obtainable, for example, from Lucas Ingredients Ltd, Kingswood, Bristol, UK. Such grits typically are formed by rolling or compressing soya beans to squeeze out the oil, and then extracting the resulting flakes with a solvent such as hexane to remove residual oil. Such high PDI soya grits have been measured as having an oil absorbency of about one and a quarter times their own weight using the abovementioned test procedure. Lower PDI protein-based extenders may also be used but are generally less preferred. Other protein based extenders which may be used include soya grit protein concentrate from which soluble carbohydrates have been removed. One such substance is New Pro, available from Lucas Ingredients. This substance has an oil absorbency of approximately twice its own weight.

The term aromatic edible vegetable matter encompasses those substances which are used in foods as seasonings, on account of their aromatic character. Such substances can be, for example, spices or herbs, and can be extruded singly or as mixtures.

Examples of spices include, black peppercorns, white peppercorns, cloves, coriander, cayenne, paprika, ginger, turmeric, cumin seeds, mace, mustard seeds, nutmeg, caraway seeds, cardamon, allspice (pimento), chilli peppers, the various curry powder spices and mixtures thereof.

Examples of herbs include, rosemary, basil, thyme, oregano, marjoram, fennel, mint and sage.

Other categories of aromatic edible vegetable matter which could beneficially be processed according to the method of the present invention include onion, chives and garlic.

The extruder used in the method of the present invention preferably is of the twin screw variety. The advantage of employing a twin-screw extruder and especially a twin-screw extruder utilising bilobal paddles grouped in regions is that it is not necessary to pre-grind the aromatic edible vegetable matter before extrusion since the paddles act together to crack and comminute the structure of the vegetable matter.

Extruders suitable for use in the method of the present invention include those disclosed in European Patent Application No. 88305097.3 (Publication No. 0294226). Particularly suitable extruders are the models designated MPF 50 and 80, manufactured by APV Baker (formerly Baker Perkins) of Peterborough, UK. Other suitable extruders are manufactured by, for example, Clextral SA of Firminy Cedex, France; Wenger of Kansas City, Missouri, U.S.A.; Mapimpianti of Galliera Veneta PD, Italy; Buhler of Uzvil, Switzerland and Werner and Pfleiderer of Stuttgart, Federal Republic of Germany.

The extruder screw configuration can be set up to provide an upstream helical feed screw region, a downstream lead discharge screw region for discharging through a die at the downstream end of the extruder and a plurality of paddle regions downstream of the feed region comprising pairs of symmetrical bilobal paddles, the paddles of each pair of which are carried on respective screws of the extruder and are oriented at 90° with respect to one another.

More particularily the extruder screw configuration can be set up in a manner similar to that disclosed in EP 0294226. Thus, for example, it can comprise an upstream helical feed screw region, a downstream helical lead discharge screw region, two intermediate lead screw regions and three paddle regions alternating with feed and lead screw regions. The precise configuration of the extruder screw can be determined by the skilled man through routine trial and error experimentation based on the disclosure in EP 0294226 and the examples below. However, in one embodiment of the process, the upstream paddle region can consist of 4 x 45° forwarding paddles, the intermediate paddle region can consist of 3 x 90° paddles followed by 3 x 45° reversing paddles with the downstream paddle region consisting of 3 x 60° forwarding paddles followed by 3 x 60° reversing paddles.

The form in which the vegetable matter is introduced into the extruder will depend on the precise nature of the vegetable matter. Ideally, where possible, it can be introduced in the whole state particularly when the vegetable matter is a spice, although, where necessary, the vegetable matter can be chopped or coarsely ground to give smaller particles of a size which can be fed into the extruder. Thus, for example, peppercorns are of a sufficiently small size to be introduced whole. With larger spices, a "kibbling" or coarse milling step can be employed to give particles of peppercorn size eg. 1-3mm across. Similarly when the vegetable matter is in leaf form, it can be chopped coarsely to give pieces of 1-3mm across. It is preferred that the vegetable matter is not finely ground (ie. wherein substantially all of the resulting particles are less than 0.5mm in diameter) before extrusion since this may give rise to loss of a proportion of the volatile aroma- and flavour-producing substances in the vegetable matter.

In order to ensure that the vegetable matter and the extender achieve commercial sterility, the process is controlled such that the maximum temperature to which the vegetable matter is exposed is in the range 90°C to 180°C, particularly, about 120°C to about 145°C. Typically, the maximum temperature is achieved only in the region adjacent to the die and hence the time over which the composition is exposed to such a temperature is relatively short, for example two to three seconds. Much, if not all of the heat required to generate such temperatures will arise through frictional heating as the vegetable matter/extender mixture is forced through the extruder. The level of frictional heating will depend upon the pressure to which the mixture is subjected, the identity of the vegetable matter and the moistness of the mixture. With vegetable matter that is very dry in nature and contains relatively little oil, frictional heating accounts for essentially all of the heat needed to reach the required temperature. With such matter, it can be necessary to pass cooling fluid through the extruder to prevent overheating. When the vegetable matter contains a greater proportion of oils, these oils act as natural lubricants and reduce the friction between the particles of vegetable matter. This has the effect of reducing the degree of frictional heating. In such cases it can be necessary to apply heat to the extruder, for example by means of an electric heating coil as discussed below. Where the fixed oil content is greater than 10% it is preferred to add higher quantities of extender, e.g. amounts sufficient to reduce the total oil content of the extruded product to around 10% or less, so as to increase the friction and consequently the degree of shear.

With spices such as peppercorns and the like, which are relatively dry and have a lower oil content, water is usually added to the mixture to be extruded in order to provide lubrication. The amount of water to be added will vary according to the absorptive power of the extender but will usually be chosen such that the extruded product has a total moisture content of not more than about 14%(w/w). Products with a moisture content substantially greater than this would be more susceptible to the formation therein of moulds, with the consequent deterioration of general quality. By adjusting the amount of water added to the mixture, prior to or during extrusion, to give a total moisture content of 14%(w/w) or less in the extruded product, the need for a heated drying stage after extrusion is avoided thereby minimising the opportunity for essential oils to evaporate from the mixture.

Preferably the product emerging from the extruder die is then rapidly cooled, for example by suspending in a chilled fluidising airstream in accordance with known methods. This reduces still further the quantities of volatile essential oils lost to the atmosphere.

The pressure to which the mixture is subjected within the extruder will depend upon the moistness of the mixture, the feed rate of raw material into the extruder, the configuration of the paddles on the extruder screws and the speed of rotation of the screws. In general, the pressure will vary along the extruder barrel in accordance with the configuration of the screw and typically will be greatest in the region of the die. Typically there will be an ascending pressure gradient along the extruder barrel towards the die.

Typical pressures to which the mixture is subjected in the region of the die would be in the range up to about $10^4$ kPa, for example in the range from about $10^3$ kPa to about $10^4$ kPa. For mixtures containing peppercorns, the die pressure typically would be in the region of 2.5 x $10^3$ kPa to 5 x $10^3$ kPa.

Typical feed rates generating such pressures in the extruder described hereinabove would be of the order of 50 to 1000 kg/hour, for example 100 to 500 kg/hour.

The method of the present invention will now be illustrated in greater detail by the following non-limiting examples

Example 1

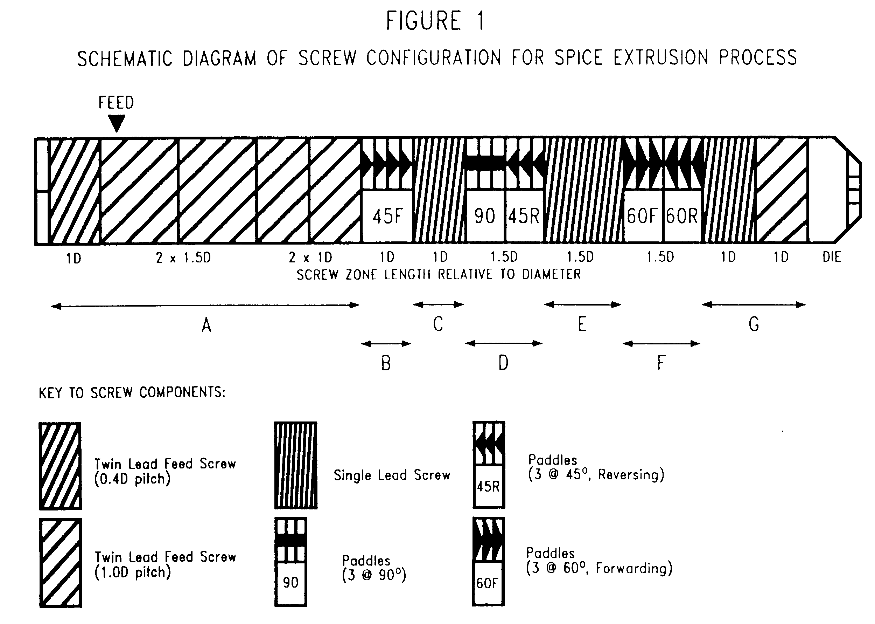

An APV Baker MPF50 twin-screw extruder was set up with a screw configuration as shown in Figure 1. Thus, the screw configuration comprised an upstream twin start feed screw region A, a downstream region G comprising single lead and twin start feed screws, two intermediate single lead screw regions C and E. Interspersed between these regions were three paddle regions B, D, and F.

| In paddle region B - | 4 x 45° forwarding paddles |
| In paddle region D - | 3 x 90° paddles followed by 3 x 45° reversing paddles |
| In paddle region F - | 3 x 60° forwarding paddles followed by 3 x 60° reversing paddles |

The extruder was equipped with 2 die inserts each with 7x3.5mm diameter die holes and the screw speed was then set to 400 r.p.m.

Brazilian Process Grade black peppercorns, that had previously been cleaned and de-stoned, were fed into the extruder at a rate of 74 kg/hour along with rusk (Lucas Ingredients Ltd) at a rate of approximately 21 kg/hour, and water (5 ℓ/hour) to give a total raw material feed rate of 100 kg/hour. The die temperature was set to 144° C The pressure at the die was recorded as 4445 kPa (630psig). The material was extruded through the die and was then sliced to form pellets by a rotating knife located adjacent to the die. The pellets were then cooled in a fluidised bed cooler.

The extruded product was then subjected to microbiological and taste analysis according to standard techniques.

The flavour of the extruded sample was compared to the undiluted raw material. An experienced panel found no significant differences between the two samples with regard to their "pepper" flavour and heat characteristics.

Upon microbiological analysis, it was found that TVC, Anaerobic TVC and MSC counts were each reduced from $10^7$/g in the raw material to less than $10^3$/g whereas TSC counts were reduced from $10^5$/g to less than $10^{3.}$

Examples 2 to 8

Employing conditions identical or analogous to those described in Example 1, a range of spices were subjected to the extrusion method of the invention. The process conditions are shown in Table 1 below and the microbiological properties of the products are shown in Table 2 below. In each case the flavour of the extruded sample was judged by an experienced panel and no significant differences were found between the flavour of the extruded sample and the flavour of the undiluted raw material.

Examples 9 to 32

Under conditions identical or analogous to those described in Example 1, a further selection of edible aromatic vegetable substances were subject to the extrusion method of the invention. The process conditions are shown in Table 3 below and the microbiological properties of the products are shown in Table 4.

TABLE 1

| Process Conditions | | | | | | |
|---|---|---|---|---|---|---|
| EX. NOS | RAW MATERIAL | TOTAL FEED RATE kg/hour | RUSK % | WATER % | DIE TEMP ° C | DIE PRESSURE* kPa (psig) |
| 2 | Black Pepper | 100 | 10 | 5 | 120 | 2900 (405) |
| 3 | Black Pepper | 490 | 30 | 7 | 146 | - |
| 4 | White Pepper | 100 | 30 | 7 | 136 | 8500 (1200) |
| 5 | Coriander | 130 | 23 | 0 | 124 | 4500 (630) |
| 6 | Cayenne | 125 | 20 | 0 | 141 | 1800 (255) |
| 7 | Paprika | 110 | 10 | 0 | 140 | 2900 (405) |
| 8 | Ginger | 100 | 20 | 6 | 135 | 4900 (690) |

* measured in psig

TABLE 2

| MICROBIOLOGICAL ANALYSIS* | | | | |
|---|---|---|---|---|
| EX NOS | TVC | ANAEROBIC TVC | MSC | TSC |
| 2 | $(10^7)\ 10^3$ | - | $(10^7){<}10^3$ | $(10^7){<}10^3$ |
| 3 | $(10^8){<}10^3$ | $(10^7){<}10^3$ | $(10^7){<}10^3$ | $(10^6){<}10^3$ |
| 4 | $(10^4)\ 10^3$ | $(10^4)\ 10^3$ | $(10^5)\ 10^2$ | $({<}10^3){<}10^3$ |
| 5 | $(10^6)\ 10^3$ | $(10^6)\ 10^3$ | $(10^6)\ 10^2$ | $(10^6)\ 10^2$ |
| 6 | $(10^4)\ 10^3$ | $(10^4){<}10$ | $(10){<}10$ | $(100){<}10$ |
| 7 | $(10^6)\ 10^2$ | $(10^6)\ 10^2$ | $(10^6)\ 10^3$ | $(10){<}10$ |
| 8 | $(10^4)\ 10^2$ | $(10^4){<}10$ | $(10^3){<}10$ | $(10^3){<}10$ |

*(Raw Material Organisms/g)

TABLE 3

| | | Process Conditions | | | | |
|---|---|---|---|---|---|---|
| Ex. NOs | RAW MATERIAL | TOTAL FEED RATE kg/hour | RUSK % | WATER % | DIE TEMP °C | DIE PRES kPa (Psig) |
| 9 | Aniseed | 100 | 19 | 6 | 143 | 3000 (420) |
| 10 | Basil | 75 | 19 | 6 | 140 | 4700 (660) |
| 11 | Cayenne | 100 | 19 | 6 | 162 | 3600 (500) |
| 12 | Chilli (powder) | 100 | 28 | 7 | 140 | 1900 (270) |
| 13 | Coriander | 100 | 28 | 7 | 142 | 4700 (660) |
| 14 | Cumin | 100 | 28 | 7 | 141 | 3700 (520) |
| 15 | Garlic (powder) | 50 | 55 | 2 | 136 | 640 (90) |
| 16 | Ginger (kibbled) | 100 | 28 | 7 | 152 | 8500 (1200) |
| 17 | Mace (kibbled) | 100 | 133 | 18 | 139 | 2100 (300) |
| 18 | Marjoram | 50 | 19 | 6 | 142 | 3600 (510) |
| 19 | Mixed Spice (ground) | 100 | 28 | 7 | 140 | 4300 (600) |
| 20 | Mustard | 100 | 150 | 0 | 126 | 5300 (750) |
| 21 | Nutmeg (kibbled) | 100 | 133 | 18 | 133 | 2100 (300) |
| 22 | Onion (powder) | 50 | 86 | 14 | 140 | 4300 (600) |
| 23 | Oregano | 75 | 19 | 6 | 148 | 4100 (570) |
| 24 | Paprika | 100 | 19 | 6 | 162 | 3200 (450) |
| 25 | Parsley | 75 | 28 | 7 | 136 | 4300 (600) |
| 26 | Pepper (black) | 100 | 28 | 7 | 150 | 4900 (690) |
| 27 | Pepper (white) | 100 | 28 | 7 | 142 | 6400 (900) |
| 28 | Pimento | 100 | 28 | 7 | 149 | 6600 (930) |
| 29 | Rosemary | 75 | 28 | 7 | 125 | 3200 (450) |
| 30 | Sage | 50 | 28 | 7 | 140 | 5800 (810) |
| 31 | Thyme | 50 | 28 | 7 | 150 | 5300 (750) |
| 32 | Turmeric | 75 | 19 | 6 | 160 | 2800 (390) |

TABLE 4

| MICROBIOLOGICAL ANALYSIS* | | | |
|---|---|---|---|
| Ex. Nos | TVC /g | MSC /g | TSC /g |
| 9 | $(10^5)$ $10^3$ | $(10^5)$ $10^3$ | $(10^2)$ $10^2$ |
| 10 | $(10^7)$ <10 | $(10^6)$ <10 | $(10^4)$ <10 |
| 11 | $(10^6)$ $10^2$ | $(10^5)$ <10 | $(10^5)$ <10 |
| 12 | $(10^3)$ <10 | $(10^5)$ <10 | (<10) <10 |
| 13 | $(10^7)$ <10 | $(10^4)$ <10 | $(10^4)$ <10 |
| 14 | $(10^5)$ $10^2$ | $(10^3)$ $10^2$ | $(10^2)$ <$10^2$ |
| 15 | $(10^5)$ <$10^2$ | $(10^5)$ <10 | (<$10^2$) <10 |
| 16 | $(10^4)$ <$10^2$ | $(10^2)$ <10 | $(10^2)$ <10 |
| 17 | $(10^3)$ <10 | (<10) <10 | (<10) <10 |
| 18 | $(10^6)$ <10 | $(10^5)$ <10 | $(10^4)$ <10 |
| 19 | $(10^6)$ $10^2$ | $(10^5)$ <$10^2$ | $(10^5)$ <10 |
| 20 | $(10^3)$ $10^2$ | (<10) <10 | (<10) <10 |
| 21 | $(10^6)$ <10 | $(10^5)$ <10 | $(10^4)$ <10 |
| 22 | $(10^4)$ <$10^2$ | $(10^5)$ <10 | $(10^5)$ <10 |
| 23 | $(10^4)$ <10 | $(10^4)$ <10 | $(10^4)$ <10 |
| 24 | $(10^2)$ <10 | $(10^2)$ <10 | $(10^2)$ <10 |
| 25 | $(10^4)$ $10^2$ | $(10^3)$ <$10^2$ | $(10^3)$ <$10^3$ |
| 26 | $(10^6)$ <10 | $(10^6)$ <10 | $(10^5)$ <10 |
| 27 | $(10^5)$ <10 | $(10^3)$ <10 | $(10^2)$ <10 |
| 28 | $(10^6)$ $10^2$ | $(10^6)$ <10 | $(10^5)$ <10 |
| 29 | $(10^5)$ <10 | $(10^4)$ <10 | $(10^3)$ <10 |
| 30 | $(10^5)$ <10 | $(10^4)$ <10 | (<10) <10 |
| 31 | $(10^6)$ <10 | $(10^5)$ <10 | $(10^5)$ <10 |
| 32 | $(10^7)$ <10 | $(10^7)$ <10 | $(10^6)$ <10 |

(* Raw Material Organisms/g)

## COMPARATIVE EXAMPLES

### Example 33

#### A Comparison of the Loss of Volatile Essential Oils from Raw and Extruded Black Pepper

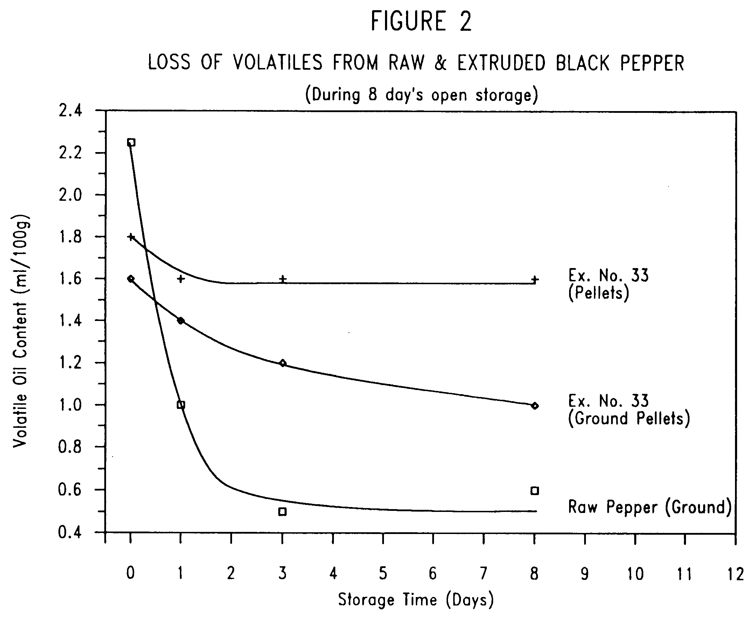

Using the method and general process conditions set out in Example 1, and the specific process conditions given in Table 5 below, whole black peppers were extruded along with rusk. Some of the resulting condiment pellets were then ground to a powder, and both ground and unground pellets were left in an open dish for eight days, samples being taken at intervals during this period to determine the volatile oil content. For comparison purposes, freshly ground raw black pepper was also left in an open dish for eight days and the volatile oil content determined in like manner. The results are shown in Figure 2.

Figure 2 illustrates that although some of the volatile essential oils are lost as a result of extrusion, the subsequent loss of oils during storage is considerably less with the extruded pepper/rusk combination than with ground raw pepper.

### Examples 34 to 37

#### A Comparison of the Loss of Volatile Essential Oils from White Pepper extruded with and without Extender

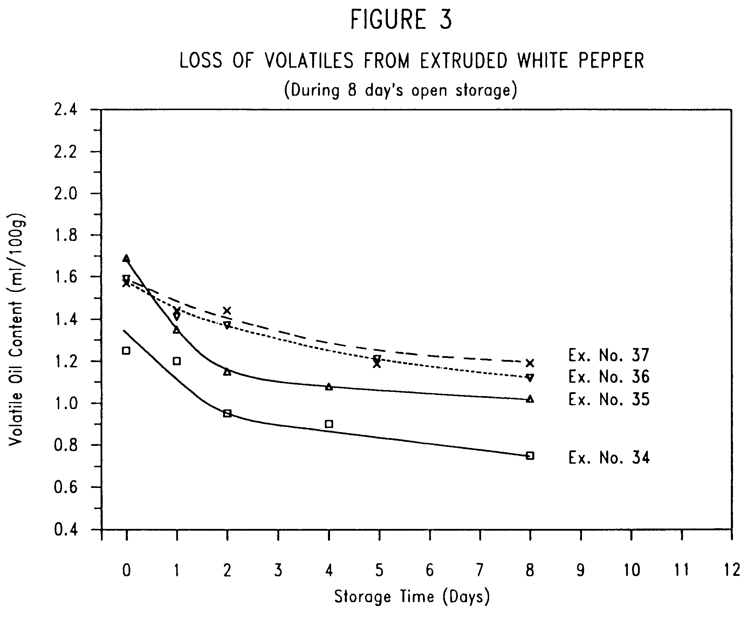

Using the method and general process set out in Example 1, and the specific process conditions given in Table 5 below, whole white peppers were extruded in the presence of various extenders, and in the absence of extenders. Following extrusion, the resulting pellets were ground and then left in an open dish for eight days. Samples were taken at regular intervals during this period and the volatile oil contents determined. The results are shown in Figure 3.

EP 0 426 311 B1

The rusk referred to in Figure 3 is a standard dried yeastless rusk available from Lucas Ingredients Limited. The "soya" referred to in Figure 3 is defatted high PDI soya grits, also available from Lucas Ingredients Limited. Figure 3 illustrates that although there is an initial loss of volatile essential oils during extrusion, regardless of the presence or absence of an extender, the initial loss is consierably greater when an extender is not present. Moreover, the rate of loss of volatile essential oils is greater when no extender is present.

## TABLE 5

### Process Conditions for Figures 2 & 3

| Ex. NOs | RAW MATERIAL | TOTAL FEED RATE kg/hour | EXTENDER % | WATER % | SCREW SPEED RPM | DIE TEMP °C | DIE PRES kPa (Psig) |
|---------|--------------|--------------------------|------------|---------|------------------|-------------|----------------------|
| 33 | Pepper (black) | 100 | Rusk 28 | 7 | 400 | 140 | 2400 (330) |
| 34 | Pepper (white) | 100 | 0 | 3 | 416 | 146 | 5700 (804) |
| 35 | Pepper (white) | 100 | Rusk 28 | 7 | 395 | 146 | 7000 (990) |
| 36 | Pepper (white) | 100 | Soya* 12 | 6 | 438 | 144 | 6700 (940) |
| 37 | Pepper (white) | 100 | Soya* 19 | 6 | 440 | 140 | 6100 (860) |

*(Defatted, high PDI§ soya grits)

§(PDI = Protein Dispersibility Index)

## Claims

1. A method of preparing an aromatic condiment composition, which method comprises passing a mixture containing aromatic edible vegetable matter and at least 2% by weight, relative to the amount of aromatic edible vegetable matter, of an edible extender substance through an extruder wherein the extrusion process conditions comprise:
   (a) a residence time of up to 3 minutes,
   (b) a temperature in the range from 90 degrees centigrade to 180 degrees centigrade,
   (c) a degree of shear sufficiently high to achieve commercial sterility.

2. A method according to claim 1, wherein the edible extender substance is added in an amount sufficient to ensure that the total fixed oil content in the mixture is no more than around 10% by weight.

3. A method according to claim 1 or claim 2, wherein each of the total viable count, the mesophilic spore count and the thermophilic spore count is reduced to a level of not more than $10^4$/g.

4. A method according to any one of claims 1-3, wherein the extruded product is rapidly cooled after extrusion.

5. A method according to any one of claims 1-4, wherein the amount of the extender is less than 75% by weight relative to the amount of aromatic edible vegetable matter, eg. from 10% to 30%, for example 25%.

6. A method according to any one of claims 1-5 wherein the temperature is in the range from 120 degrees centigrade to 145 degrees centigrade.

7. A method according to any one of the preceding claims wherein the aromatic edible vegetable matter is selected from spices, herbs and mixtures thereof, nutmeg, mace, coriander, mustard, peppercorns, highly coloured substances, paprika, tumeric, parsley and carbohydrate-based substances of plant origin.

8. A method according to any one of the preceding claims wherein the edible extender substance comprises rusk, protein-based subsances, and defatted soya grits.

9. A method according to any one of the preceding claims wherein the edible extender substance has an oil absorbency of at least half its own weight of liquid oil, eg. corn oil.

10. A method according to any one of the preceding claims wherein the extruder is of the twin screw variety.

11. An aromatic condiment preparation containing aromatic edible vegetable matter preparable by the method of any one of the preceding claims.

12. An aromatic condiment preparation according to claim 11, wherein the aromatic vegetable matter is selected from black peppercorns, white peppercorns, cloves, coriander, cayenne, paprika, ginger, turmeric, cumin seeds, mace, mustard seeds, nutmeg, caraway seeds, cardamon, allspice (pimento), chilli peppers, curry powder spices, sage, marjoram, rosemary, basil, thyme, oregano, fennel, mint, onion, chives and garlic and mixtures thereof.

## Patentansprüche

1. Ein Verfahren zum Herstellen einer aromatischen Würzmittelzusammensetzung, wobei das Verfahren umfaßt, daß ein Gemisch, das aromatische eßbare pflanzliche Substanzen und wenigstens 2 Gew.-%, relativ zu der Menge der aromatischen eßbaren pflanzlichen Substanzen, einer eßbaren Streckmittelsubstanz enthält, durch einen Extruder geleitet wird, wobei die Extrusionsverfahrensbedingungen:
   (a) eine Verweilzeit von bis zu 3 Minuten,
   (b) eine Temperatur in dem Bereich von 90°C bis 180°C, und

(c) einen ausreichend hohen Schergrad, um kommerzielle Sterilität zu erzielen, umfassen.

2. Ein Verfahren nach Anspruch 1, bei dem die eßbare Streckmittelsubstanz in einer Menge zugegeben wird, die ausreichend ist um sicherzustellen, daß der gesamte fixierte Ölgehalt in dem Gemisch nicht mehr als etwa 10 Gew.-% beträgt.

3. Ein Verfahren nach Anspruch 1 oder Anspruch 2, bei dem die gesamte lebensfähige Keimzahl, die mesophile Sporenkeimzahl und die thermophile Sporenkeimzahl jeweils auf ein Niveau von nicht mehr als $10^4$/g reduziert ist.

4. Ein Verfahren nach einem der Ansprüche 1 bis 3, bei dem das extrudierte Produkt nach der Extrusion schnell abgekühlt wird.

5. Ein Verfahren nach einem der Ansprüche 1 bis 4, bei dem die Menge des Streckmittels weniger als 75 Gew.-% relativ zu der Menge der aromatischen eßbaren pflanzlichen Substanzen, z.B. 10% - 30%, beispielsweise 25%, beträgt.

6. Ein Verfahren nach einem der Ansprüche 1 bis 5, bei dem die Temperatur in dem Bereich von 120°C bis 145°C liegt.

7. Ein Verfahren nach einem der vorhergehenden Ansprüche, bei dem die aromatischen eßbaren pflanzlichen Substanzen aus Gewürzen, Kräutern und Mischungen derselben, Muskatnuß, Mazis (Muskatblüte), Koriander, Senf, Pfefferkörnern, stark gefärbten Substanzen, Paprika, Turmerikwurzel, Petersilie und Substanzen auf Kohlehydratbasis pflanzlichen Ursprungs ausgewählt sind.

8. Ein Verfahren nach einem der vorhergehenden Ansprüche, bei dem die eßbare Streckmittelsubstanz getrocknetes Hefe-Getreide-Gebäck (Zwieback), Substanzen auf Proteinbasis und entfettetes Sojaschrot umfaßt.

9. Ein Verfahren nach einem der vorhergehenden Ansprüche, bei dem die eßbare Streckmittelsubstanz ein Ölabsorptionsvermögen von wenigstens der Hälfte ihres eigenen Gewichtes von flüssigem Öl, z.B. Maisöl, aufweist.

10. Ein Verfahren nach einem der vorhergehenden Ansprüche, bei dem der Extruder vom Doppelschnekkentyp ist.

11. Eine aromatische Würzmittelzubereitung, die aromatische eßbare pflanzliche Substanzen enthält, die durch das Verfahren nach einem der vorhergehenden Ansprüche herstellbar ist.

12. Eine aromatische Würzmittelzubereitung nach Anspruch 11, bei der die aromatischen pflanzlichen Substanzen aus schwarzen Pfefferkörnern, weißen Pfefferkörnern, Nelken, Koriander, spanischem Pfeffer, Paprika, Ingwer, Turmerikwurzel, Kruzkümmel, Mazis (Muskatblüte), Senfkörnern, Muskatnuß, Kümmelsamen, Kardamon, Nelkenpfeffer (Pimenta officinalis), Cayennepfeffer (Chili), Currypulvergewürzen, Salbei, Majoran, Rosmarin, Basilikum, Thymian, Oregano, Fenchel, Pfefferminze, Zwiebeln, Schnittlauch und Knoblauch, und Mischungen derselben, ausgewählt sind.

**Revendications**

1. Une méthode de préparation d'une composition de condiments aromatiques, laquelle méthode comprend le passage d'un mélange contenant une matière végétale comestible aromatique et au moins 2 % en poids, de la quantité de matière végétale comestible aromatique, d'une substance diluante comestible, à travers une extrudeuse, dans laquelle les conditions du procédé d'extrusion comprennent:
   (a) un temps de séjour allant jusqu'à 3 minutes,
   (b) une température comprise dans la gamme de 90 degrés centigrades à 180 degrés centigrades,
   (c) un degré de cisaillement suffisamment élevé pour parvenir à une stérilité commerciale.

13

2. Une méthode, selon la revendication 1, dans laquelle la substance diluante comestible est ajoutée en une quantité suffisante pour assurer que le contenu en huile fixée totale, dans le mélange, ne représente pas plus d'environ 10 % en poids.

3. Une méthode, selon la revendication 1 ou la revendication 2, dans laquelle chacun des comptages viables totaux, des comptages des spores mésophiles et des comptages des spores thermophiles, est réduit à un niveau ne dépassant pas $10^4$ /g.

4. Une méthode, selon l'une quelconque des revendications 1-3, dans laquelle le produit extrudé est rapidement refroidi après l'extrusion.

5. Une méthode, selon l'une quelconque des revendications 1-4, dans laquelle la quantité de diluant est inférieure à 75 % en poids, de la quantité de matière végétale comestible aromatique, par exemple, de 10 % à 30 %, par exemple 25 %.

6. Une méthode, selon l'une quelconque des revendications 1-5, dans laquelle la température est comprise dans la gamme de 120 degrés centigrades à 145 degrés centigrades.

7. Une méthode, selon l'une quelconque des revendications précédentes, dans laquelle la matière végétale comestible aromatique est sélectionnée parmi les épices, les herbes et des mélanges de ceux-ci, la muscade, le macis, la coriandre, la moutarde, les grains de poivre, les substances hautement colorées, le paprika, le safran des Indes, le persil et les substances à base d'hydrates de carbone d'origine végétale.

8. Une méthode, selon l'une quelconque des revendications précédentes,dans laquelle la substance diluante comestible comprend la biscotte, les substances à base de protéines et les particules de soja dégraissées.

9. Une méthode, selon l'une quelconque des revendications précédentes, dans laquelle la substance diluante comestible a une capacité d'absorption d'huile d'au moins la moitié de son propre poids en huile liquide, par exemple, en huile de mais.

10. Une méthode, selon l'une quelconque des revendications précédentes, dans laquelle l'extrudeuse est de la variété à deux vis.

11. Une préparation de condiments aromatiques contenant une matière végétale comestible aromatique, préparable par la méthode selon l'une quelconque des revendications précédentes.

12. Une préparation de condiments aromatiques, selon la revendication 11, dans laquelle la matière végétale aromatique est sélectionnée parmi les grains de poivre noirs, les grains de poivre blancs, les clous de girofle, la coriandre, le poivre de cayenne, le paprika, le gingembre, le safran des Indes, les graines de cumin, le macis, les graines de moutarde, la muscade, les graines de carvi, la cardamone, le piment, les piments rouges, les épices de la poudre de curry, la sauge, la marjolaine, le romarin, le basilic, le thym, l'origan, le fenouil, la menthe, l'oignon, la ciboulette et l'ail et les mélanges de ceux-ci.

# FIGURE 1

## SCHEMATIC DIAGRAM OF SCREW CONFIGURATION FOR SPICE EXTRUSION PROCESS

FEED

| 45F | 90 | 45R | 60F | 60R |

1D | 2 x 1.5D | 2 x 1D | 1D | 1D | 1.5D | 1.5D | 1.5D | 1D | 1D | DIE

SCREW ZONE LENGTH RELATIVE TO DIAMETER

A    C    E    G
B    D    F

KEY TO SCREW COMPONENTS:

Twin Lead Feed Screw (0.4D pitch)

Single Lead Screw

Paddles (3 @ 45°, Reversing) 45R

Twin Lead Feed Screw (1.0D pitch)

Paddles (3 @ 90°) 90

Paddles (3 @ 60°, Forwarding) 60F

EP 0 426 311 B1

# FIGURE 2

## LOSS OF VOLATILES FROM RAW & EXTRUDED BLACK PEPPER

### (During 8 day's open storage)

Ex. No. 33 (Pellets)

Ex. No. 33 (Ground Pellets)

Raw Pepper (Ground)

Volatile Oil Content (ml/100g)

Storage Time (Days)

EP 0 426 311 B1

# FIGURE 3

## LOSS OF VOLATILES FROM EXTRUDED WHITE PEPPER

### (During 8 day's open storage)